# EUROPÄISCHE PATENTSCHRIFT

(11) **EP 3 873 680 B1**
(45) Veröffentlichungstag und Bekanntmachung des Hinweises auf die Patenterteilung: **07.06.2023**
(21) Anmeldenummer: 19801492.0
(22) Anmeldetag: 28.10.2019
(51) Int. Cl.: G01H 9/00, G01P 5/24

(54) **LUFTSCHALLWANDLER, INSBESONDERE ULTRASCHALLWANDLER, FÜR DEN EINSATZ UNTER NIEDERSCHLAGS- UND BETAUUNGS-BEDINGUNGEN**
AIRBORNE SOUND TRANSDUCER, MORE PARTICULARLY ULTRASONIC TRANSDUCER, FOR USE IN PRECIPITATION AND THAW CONDITIONS
TRANSDUCTEUR À AIR, EN PARTICULIER TRANSDUCTEUR À ULTRASONS, DESTINÉ À ÊTRE UTILISÉ DANS DES CONDITIONS DE PRÉCIPITATIONS ET DE CONDENSATION DE L'HUMIDITÉ

(30) Priorität: 02.11.2018 DE 102018127377
(43) Veröffentlichungstag der Anmeldung: 08.09.2021
(73) Patentinhaber: Adolf Thies GmbH & Co KG, 37083 Göttingen (DE)
(72) Erfinder: WINDOLPH, Herbert, 37115 Duderstadt (DE)
(74) Vertreter: REHBERG HÜPPE + PARTNER
(86) Internationale Anmeldenummer: PCT/EP2019/079404
(87) Internationale Veröffentlichungsnummer: WO 2020/089172

(56) Entgegenhaltungen:
- DE-A1- 10 158 144
- DE-A1-102017 209 471
- US-A1- 2018 198 006

## Beschreibung

### TECHNISCHES GEBIET DER ERFINDUNG

Die Erfindung bezieht sich auf einen Luftschallwandler, insbesondere einen Ultraschallwandler, mit einem elektrisch-mechanischen Wandler, mit einer auf einer akustisch aktiven Fläche des elektrisch-mechanischen Wandlers angeordneten Luftimpedanzanpassschicht und mit einer auf der Luftimpedanzanpassschicht angeordneten Abdeckung, die mit einer Außenoberfläche eine freiliegende akustischen Fläche des Luftschallwandlers ausbildet. Weiterhin bezieht sich die Erfindung auf eine Vorrichtung mit einem solchen Luftschallwandler sowie auf ein Ultraschallanemometer mit einem Reflektor und mit mindestens zwei solchen Luftschallwandlern.

Bei dem Luftschallwandler dient die Luftimpedanzanpassschicht, die auch als λ/4-Anpassschicht bezeichnet wird, zur Anpassung der unterschiedlichen Impedanzen, definiert als Produkt von Dichte und Schallgeschwindigkeit, zwischen dem Material des elektrisch-mechanischen Wandlers und Luft oder einem anderen in der Umgebung des Luftschallwandlers vorherrschenden Gases.

Wie schon angedeutet wurde, handelt es sich bei dem erfindungsgemäßen Luftschallwandler insbesondere um einen Ultraschallwandler. Grundsätzlich kann der erfindungsgemäße Luftschallwandler aber auch bei niedrigeren Frequenzen als denjenigen von Ultraschall, d. h. auch bei Frequenzen unterhalb 16 kHz, eingesetzt werden.

Dass die Luftimpedanzanpassschicht auf der akustisch aktiven Oberfläche des elektrisch-mechanischen Wandlers angeordnet ist, schließt nicht aus, dass zwischen der akustisch aktiven Oberfläche und der Luftimpedanzanpassschicht noch eine weitere Schicht angeordnet ist.

Die auf der Luftimpedanzanpassschicht angeordnete Abdeckung dient typischerweise dazu, ein Eintreten von Fremdstoffen in die Luftimpedanzanpassschicht zu verhindern, und ist entsprechend typischerweise eine geschlossene Oberfläche.

### STAND DER TECHNIK

Aus der DE 101 58 144 A1 ist ein Ultraschallwandler mit einer freiliegenden akustischen Fläche, insbesondere für die Verwendung in der Ultraschall-Anemometrie, bekannt. Der Ultraschallwandler umfasst einen elektrisch-mechanischen Wandler, der eine akustisch aktive Fläche aufweist, und eine akustische Anpassschicht, die zwischen der akustisch aktiven Fläche und der freiliegenden akustischen Fläche angeordnet ist, sowie ein Heizelement, das zwischen der akustisch aktiven Fläche des Wandlers und der Anpassschicht angeordnet ist. Das Heizelement dient zum Erwärmen der freiliegenden akustischen Fläche, um eine dort anhaftende Eis- oder Raureifschicht aufzutauen und dort z. B. in Form von Tropfen anhaftendes Wasser zu verdampfen.

Auf der freiliegenden akustischen Fläche angeordnete Wassertropfen können die Abstrahlkeule deformieren und Neben-Abstrahlkeulen erzeugen. Dadurch wird die Funktion eines Ultraschallanemometers, insbesondere eines solchen mit einem Reflektor, über den hinweg sich mehrere Ultraschallwandler gegenüberliegen, stark beeinträchtigt. Von der freiliegenden akustischen Fläche des aus der DE 101 58 144 A1 bekannten Ultraschallwandlers lassen sich Wassertropfen mit Hilfe seines Heizelements durch Verdampfen jedoch nur langsam entfernen. Zudem altert der bekannte Ultraschallwandler aufgrund der damit einhergehenden thermischen Belastung schneller, wenn seine freiliegende akustische Fläche ständig auf ausreichend hoher Temperatur gehalten wird, um auftretende Wassertropfen zu verdampfen.

Aus der DE 10 2017 209 471 A1 ist ein Ultraschallsensor zum Erfassen des Füllstands und/oder der Qualität eines Fluids einer Brennkraftmaschine bekannt. Der Ultraschallsensor weist einen Schallwandler, der dazu ausgebildet ist, Ultraschallwellen auszusenden und zu empfangen, und ein im Fluid angeordnetes Schallführungselement auf. Das Schallführungselement umfasst einen Schallführungsabschnitt, der dazu ausgebildet ist, die vom Schallwandler ausgesandten Ultraschallwellen vor ihrer Einkopplung in das Fluid zumindest teilweise zu führen, und einen Schallkopplungsabschnitt. Der Schallkopplungsabschnitt ist dazu ausgebildet, die vom Schallführungsabschnitt geführten Ultraschallwellen so in das Fluid einzukoppeln, dass die Ultraschallwellen zumindest teilweise in Richtung der Fluidoberfläche ausgesandt werden. Der Schallkopplungsabschnitt des Schallführungselements ist mit einer Beschichtung versehen, die es möglichen Ablagerungen erschwert, sich an dem Schallkopplungselement anzusammeln und dort anzuhaften. Diese Beschichtung umfasst beispielsweise eine metallische Beschichtung. Ferner kann die Beschichtung in Abhängigkeit des vorherrschenden Fluids hydrophob, hydrophil, lipophob oder lipophil sein.

Aus der JP 61169099 A ist ein Ultraschallwandler bekannt, der einen elektrisch-mechanischen Wandler und eine auf einer akustisch aktiven Fläche des elektrisch-mechanischen Wandlers angeordnete Luftimpedanzanpassschicht in Form einer porösen Polymermembran aufweist. Der elektrisch-mechanische Wandler ist hydrophob. Um ein Eindringen eines zum Ankleben der porösen Polymermembran an den Wandler verwendeten Klebstoffs in die grundsätzlich hydrophile poröse Polymermembran zu verhindern und um die Polymermembran vor Feuchtigkeit zu schützen, wird die Polymermembran hydrophobiert.

Aus der US 2018/ 0 198 006 A1 ist es bekannt, die physikalischen und chemischen Eigenschaften von Oberflächen durch Ablagerung von Teilchenmonolagen zu beeinflussen. Zu den Eigenschaften zählt die Hydrophilität der Oberflächen, wobei Oberflächen mit einem Benetzungswinkel von 20 bis 60° als hydrophile Oberflächen und Oberflächen mit einem Benetzungswinkel 0 bis 20° als superhydrophile Oberflächen bezeichnet werden. Die Benetzbarkeit einer Oberfläche soll durch Ablagern dünner Schichten unterschiedlicher Benetzbarkeit, z. B. einer hydrophilen oder hydrophoben Schicht, oder durch beabsichtigtes Erhöhen ihrer Rauheit zwecks Einbringen von Nanostrukturen, die das Spreiten von Wasser fördern oder minimieren, kontrolliert geändert werden.

### AUFGABE DER ERFINDUNG

Der Erfindung liegt die Aufgabe zugrunde, einen Luftschallwandler aufzuzeigen, dessen Funktion durch Regen und anderen tropfenbildenden Niederschlag nicht beeinträchtigt wird und der dadurch in Vorrichtungen, insbesondere Ultraschallanemometern, zum Einsatz kommen kann, die widrigen Wetterbedingungen ausgesetzt sind.

### LÖSUNG

Die Aufgabe der Erfindung wird durch einen Luftschallwandler mit den Merkmalen des unabhängigen Patentanspruchs 1 gelöst. Die abhängigen Patentansprüche 2 bis 6 sind auf bevorzugte Ausführungsformen des erfindungsgemäßen Luftschallwandlers gerichtet. Patentanspruch 7 betrifft eine Vorrichtung mit einem erfindungsgemäßen Luftschallwandler. Die abhängigen Patentansprüche 8 bis 12 sind auf bevorzugte Ausführungsformen dieser Vorrichtung gerichtet. Der Patentanspruch 13 betrifft ein Ultraschallanemometer mit einem Reflektor und mit mindestens zwei erfindungsgemäßen Luftschallwandlern. Die abhängigen Patentansprüche 14 und 15 sind auf bevorzugte Ausführungsformen des Ultraschallanemometers gerichtet.

### BESCHREIBUNG DER ERFINDUNG

Bei einem erfindungsgemäßen Luftschallwandler mit einem elektrisch-mechanischen Wandler, mit einer auf einer akustisch aktiven Fläche des elektrisch-mechanischen Wandlers angeordneten Luftimpedanzanpassschicht und mit einer auf der Luftimpedanzanpassschicht angeordneten Abdeckung, die mit einer Außenoberfläche eine freiliegende akustischen Fläche des Luftschallwandlers ausbildet, ist die Außenoberfläche hydrophil. Dabei ist unter einer hydrophilen Außenoberfläche eine solche Außenoberfläche zu verstehen, bei der ein Benetzungswinkel bei einer Benetzung der Außenoberfläche mit Wasser kleiner als 60° ist.

Die Außenoberfläche der Abdeckung bildet eine freiliegende akustische Fläche des Luftschallwandlers aus. Die Abdeckung ist typischerweise geschlossen. Hierunter ist zu verstehen, dass sie keine oder zumindest keine makroskopischen Durchbrechungen aufweist, durch die Wasser hindurchtreten könnte.

Der Benetzungswinkel zeigt das Maß der Hydrophilität der Außenoberfläche an. Je kleiner der Benetzungswinkel ist, desto größer ist die Hydrophilität. Der Benetzungswinkel hängt von dem Verhältnis der Grenzflächenspannungen zwischen der benetzenden Flüssigkeit und der Außenoberfläche, zwischen der umgebenden Luft und der benetzenden Flüssigkeit sowie zwischen der umgebenden Luft und der Außenoberfläche ab. Dabei geht neben Materialeigenschaften auch eine etwaige Strukturierung der Außenoberfläche ein, die die Grenzflächenspannung zwischen dem Wasser und der Außenoberfläche beeinflusst.

Wenn hier auf Luft in der Umgebung des Luftschallwandlers und eine Luftimpedanzanpassschicht abgestellt wird, so schließt dies eine Verwendung des Luftschallwandlers in anderen gasförmigen Umgebungen ebenso wenig aus wie eine Anpassung der Luftimpedanzanpassschicht und der Hydrophilität der Außenoberfläche der Abdeckung der Luftimpedanzanpassschicht an andere Gase als Luft in der jeweiligen Umgebung des Luftschallwandlers.

Durch die Hydrophilität der Außenoberfläche des erfindungsgemäßen Luftschallwandlers wird die Ausbildung von Tropfen aus Wasser auf dieser Außenoberfläche verhindert. Vielmehr wird wässriger Niederschlag auf der Außenoberfläche gespreitet, d. h. das Niederschlagswasser verteilt sich flächig und schnell und oftmals auch vollflächig über die Außenoberfläche. Eine flächige Benetzung der Außenoberfläche, die die freiliegende akustische Fläche des erfindungsgemäßen Luftschallwandlers ist, deformiert die Abstrahlkeule, in die der Luftschall vom dem Luftschallwandler abgestrahlt wird, anders als ein auf der Außenoberfläche angeordneter Wassertropfen nicht signifikant. Dies gilt insbesondere dann, wenn die Hydrophilität der Außenoberfläche so groß ist, dass der Benetzungswinkel kleiner als 40° ist und vorzugsweise sogar kleiner als 20° und am meisten bevorzugt kleiner als 10°.

Konkret kann die hydrophile Außenoberfläche des erfindungsgemäßen Luftschallwandlers eine hydrophilisierte Metalloberfläche sein. Das Hydrophilisieren der Metalloberfläche kann, je nach Zusammensetzung der Metalloberfläche, durch Oxidieren und/oder Carbonieren und/oder Anrauen bewirkt sein. Beispielsweise kann ein Metallanteil der Metalloberfläche zumindest überwiegend aus Zink, Kupfer, Edelstahl oder Titan bestehen. Zink und Kupfer können zwecks Hydrophilisierung durch Carbonieren, beispielsweise mit Hilfe von kohlensäurehaltigem Wasser, oder Oxidieren an Luft hydrophilisiert werden. Edelstahl und Titan sind insbesondere durch Anrauen, beispielsweise mittels Anschleifen oder Sandstrahlen, und/oder durch oxidatives Altern hydrophilisierbar. Eine hydrophilisierte Metalloberfläche, insbesondere eine solche aus Edelstahl oder Titan ist nicht nur als Außenoberfläche beständig, sondern sie behält ihre Hydrophilität auch dauerhaft bei. Hingegen wird mit vielen bekannten hydrophilisierenden Beschichtungen aus Kunststoff keine hohe Standfestigkeit der Hydrophilität der Außenoberfläche über einige bis viele Jahre hinweg erreicht.

Bei der praktischen Umsetzung des erfindungsgemäßen Luftschallwandlers kann die hydrophilisierte Metalloberfläche die Außenoberfläche eines Dünnblechformkörpers sein, dessen Blechdicke typischerweise zwischen 0,05 und 0,2 mm liegt. Dieser Dünnblechformkörper kann grundsätzlich direkt auf der Luftimpedanzanpassschicht angeordnet sein. Vorzugsweise ist er aber auf einer Abdeckschichtlage aus Kunststoff angeordnet. Diese Abdeckschichtlage kann dabei Teil einer elastischen Schutzhülle um die Luftimpedanzanpassschicht sein.

Bei einer erfindungsgemäßen Vorrichtung mit einem erfindungsgemäßen Luftschallwandler reicht ein Wasserabholarm seitlich vor einen tiefsten Bereich der Außenoberfläche. Die Angabe tiefster Bereich der Außenoberfläche bezieht sich auf den im Betrieb des Luftschallwandlers bzw. der diesen umfassenden Vorrichtung auf der in Richtung der Erdanziehungskraft geringsten Höhe gelegenen Bereich der Außenoberfläche. Hier sammelt sich über die Außenoberfläche gespreitetes Wasser aufgrund seiner Schwerkraft an und kommt so in Kontakt mit dem Wasserabholarm. Wenn der Wasserabholarm eine hydrophile Oberfläche aufweist, wobei ein Benetzungswinkel bei einer Benetzung der Oberfläche mit Wasser noch kleiner als der Benetzungswinkel bei der Benetzung der Außenoberfläche des erfindungsgemäßen Luftschallwandlers mit Wasser sein kann, führt der Wasserabholarm das mit ihm in Kontakt gelangende Wasser von der Außenoberfläche ab. So wird mit dem Wasserabholarm das Aufbauen einer dickeren Schicht aus Wasser auf der Außenoberfläche verhindert, wenn das Wasser nur über die Außenoberfläche, nicht aber über angrenzende hydrophobe Bereiche beispielsweise einer elastischen Schutzhülle um die Luftimpedanzanpassschicht gespreitet wird.

Geometrisch gesehen kann ein freies Ende des Wasserabholarms in Richtung einer Flächennormalen der Außenoberfläche etwa 0,05 mm bis 1,0 mm oder 0,1 bis 0,5 mm vor der Außenoberfläche des erfindungsgemäßen Luftschallwandlers angeordnet sein. In seitlicher Richtung parallel zur Haupterstreckungsebene der Außenoberfläche kann das freie Ende des Wasserabholarms zwischen 0,1 mm neben der Außenoberfläche und bis zu 2 mm überlappend mit der Außenoberfläche oder zwischen 0,05 mm und 0,5 mm mit der Außenoberfläche überlappend enden. Der Wasserabholarm stört aufgrund seiner allenfalls geringen Überlappung mit der Außenoberfläche den von der Außenoberfläche aus abgestrahlten Luftschall nicht. Der Wasserabholarm liegt zugleich so dicht an der Außenoberfläche, dass schon eine Wasserschicht geringer Dicke auf der Außenoberfläche mit dem Wasserabholarm in Kontakt kommt und von dem Wasserabholarm abgeführt wird.

Ein dem freien Ende gegenüberliegendes Ende des Wasserabholarms, das hier als Basis des Wasserabholarms bezeichnet wird, kann bei der erfindungsgemäßen Vorrichtung in vertikaler Richtung mindestens 0,5 mm, vorzugsweise mindestens 1 mm, mehr bevorzugt mindestens 2 mm und noch mehr bevorzugt mindestens 5 mm unterhalb des tiefsten Bereichs der Außenoberfläche liegen. Diese Angaben beziehen sich wieder auf die Ausrichtung der erfindungsgemäßen Vorrichtung beim Betrieb des erfindungsgemäßen Ultraschallwandlers. Hiermit wird die Schwerkraft des mit dem Abholarm abgeholten Wassers ausgenutzt, um dieses zu der Basis des Wasserabholarms hin abzuleiten. Diese Basis des Wasserabholarms kann in einem Ablaufgraben angeordnet sein, dessen Grund von der Basis weg abfällt, um das Wasser weiter abzuführen. Konkret kann dieser Ablaufgraben in einem Formkörper ausgebildet sein, an dem der Wasserabholarm ortsfest gelagert und gegenüber dem der Luftschallwandler mit einer elastischen Dichtung abgedichtet sein kann. Der Formkörper kann seinerseits eine hydrophile Oberfläche aufweisen. Dann sind zur Abführung des Wassers die Ablaufgräben weniger notwendig oder sogar entbehrlich. Wenn der Formkörper jedoch keine hydrophile und sogar eine hydrophobe Oberfläche aufweist, sind die Ablaufgräben für das weitere Abführen des Wassers von großem Vorteil. Ein Gefälle des Ablaufgrabens in dem Formkörper kann mindestens 10°% oder vorzugsweise mindestens 20 % betragen. Dabei muss der Ablaufgraben ein solches Gefälle aber nicht über seine ganze Länge aufweisen. Vorzugsweise weist der Ablaufgraben das Gefälle jedoch zumindest zu seinem der Basis des Wasserabholarms abgekehrten offenen Ende hin auf. Die elastische Dichtung, mit der der erfindungsgemäße Luftschallwandler gegenüber dem Formkörper der erfindungsgemäßen Vorrichtung abgedichtet sein kann, bewirkt auch eine Schwingungsentkopplung. Die elastische Dichtung kann konkret Teil einer elastischen Schutzhülle um die Luftimpedanzanpassschicht des erfindungsgemäßen Luftschallwandlers sein.

Bei einem erfindungsgemäßen Ultraschallanemometer mit einem Reflektor und mit mindestens zwei erfindungsgemäßen Luftschallwandlern oder ein oder zwei erfindungsgemäßen Vorrichtungen, die mindestens zwei erfindungsgemäße Luftschallwandler umfassen, sind die mindestens zwei Luftschallwandler auf eine Reflektorfläche gerichtet, und sie liegen einander - in Schallausbreitungsrichtung über die Reflektorfläche betrachtet - gegenüber. Der eine der mindestens zwei erfindungsgemäßen Luftschallwandler empfängt den Luftschall von dem anderen der mindestens zwei erfindungsgemäßen Luftschallwandler daher nach dessen Reflektion an der Reflektorfläche. Die Vermeidung einer Tropfenbildung auf den hydrophilen Außenoberflächen der erfindungsgemäßen Luftschallwandler stellt dabei sicher, dass keine Streuungen des Luftschalls an der Außenoberfläche erfolgen, so dass kein Luftschall auf direktem Wege, d. h. ohne Reflektion an der Reflektorfläche, von dem einen zu dem anderen der mindestens zwei erfindungsgemäßen Luftschallwandler gelangt.

Vorzugsweise ist auch die Reflektorfläche bei dem erfindungsgemäßen Ultraschallanemometer hydrophil. Konkret kann der Reflektor aus Edelstahl ausgebildet sein und die den Luftschallwandlern zugekehrte Reflektorfläche kann durch Anrauen des Edelstahls und/oder oxidatives Altern hydrophilisiert sein.

Um horizontale Windgeschwindigkeiten mit dem erfindungsgemäßen Ultraschallanemometer zu messen, kann die Reflektorfläche horizontal und ober- oder unterhalb der Luftschallwandler angeordnet sein. Es versteht sich, dass zur Messung der Windgeschwindigkeit in allen horizontalen Richtungen mindestens drei Luftschallwandler vorgesehen sein müssen und vorzugsweise vier Luftschallwandler in zwei in orthogonalen Richtungen aufeinanderfolgenden Paaren angeordnet sind.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Wasserabholarm die Rede ist, ist dies so zu verstehen, dass genau ein Wasserabholarm, zwei Wasserabholarme oder mehr Wasserabholarme vorhanden sind. Die in den Patentansprüchen angeführten Merkmale können durch andere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt a) eine geschnittene perspektivische Ansicht von äußeren Teilen und b) eine Seitenansicht von in Fig. 1 a) weggelassenen inneren Teilen eines erfindungsgemäßen Luftschallwandlers.
- **Fig. 2**: zeigt ein Ultraschallanemometer mit vier erfindungsgemäßen Luftschallwandern in einer Seitenansicht.
- **Fig. 3**: zeigt das Ultraschallanemometer gemäß Fig. 2 in einer perspektivischen Seitenansicht.
- **Fig. 4**: ist ein vergrößertes Detail von Fig. 3; und
- **Fig. 5**: erläutert den Benetzungswinkel bei Benetzung einer Außenoberfläche mit Wasser.

### FIGURENBESCHREIBUNG

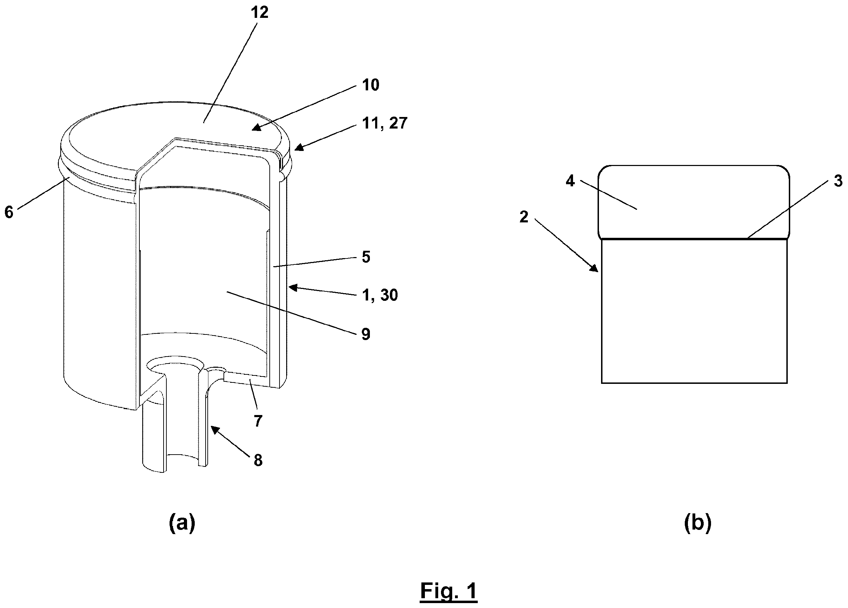

Der in **Fig. 1** in zwei Teilfiguren a) und b) gezeigte Luftschallwandler 1 weist einen elektrisch-mechanischen Wandler 2 auf. Wie Fig. 1 b) zeigt, ist auf einer akustisch aktiven Fläche 3 des elektrisch-mechanischen Wandlers 2 eine Luftimpedanzanpassschicht 4 angeordnet. Um die Luftimpedanzanpassschicht 4 und den angrenzenden elektrisch-mechanischen Wandler 2 herum ist eine in Fig. 1 a) gezeigte Schutzhülle 5 aus einem elastischen Kunststoff angeordnet. Die Schutzhülle 5 bildet einen Dichtwulst 6 aus und schließt an ein Bodenelement 7 an, das eine Durchführung 8 für nicht einzeln dargestellte Zuleitungen zu dem elektrisch-mechanischen Wandler 2 ausbildet, der in einer Ausnehmung des Bodenelements 7 angeordnet ist. Eine freiliegende akustische Fläche 10, über die der Luftschallwandler 1 Luftschall, insbesondere Ultraschall abstrahlt, wird von einem Dünnblechformkörper 11 aus dünnem Metall einer Stärke von weniger als 0,5 mm, vorzugsweise von nicht mehr als 0,2 mm ausgebildet. Der Dünnblechformkörper besteht beispielsweise aus Titan, und eine Außenoberfläche 12 des Dünnblechkörpers 11, die die freiliegende akustische Fläche 10 ausbildet, ist beispielsweise durch Anrauen derart hydrophilisiert, dass ein Benetzungswinkel von Wasser auf der Außenoberfläche 12 vorzugsweise kleiner als 20° und noch mehr bevorzugt kleiner als 10° ist.

Auch wenn in Fig. 1 die Luftimpedanzanpassschicht 4 direkt auf der akustisch aktiven Fläche 3 des elektrisch-mechanischen Wandlers 2 angeordnet ist, kann dazwischen eine weitere Schicht, beispielsweise zur Ausbildung eines Heizelements angeordnet sein. Mit einem solchen Heizelement kann insbesondere ein Vereisen der Außenoberfläche 12 verhindert werden

Zum Beispiel in der Ultraschallanemometrie, aber auch bei der Abstandsmessung mit Ultraschall wird zur Bestimmung der Signallaufzeit ein akustischer Impuls oder Wellenzug mit einem als Ultraschallwandler 30 ausgelegten Luftschallwandler 1 erzeugt und mit einem weiteren derartigen als Ultraschallwandler 30 ausgelegten Luftschallwandler 1 auf einer Empfängerseite in ein elektrisches Signal zurückgewandelt. Dabei darf sich insbesondere dann, wenn das akustische Signal über einen Reflektor 13, wie ihn die folgenden Figuren zeigen, verläuft, um beispielsweise Abschattungen eines strömenden Mediums, dessen Geschwindigkeit von Interesse ist, durch die Ultraschallwandler zu minimieren, das Abstrahl- und Empfangsverhalten der Ultraschallwandler nicht durch an deren freiliegenden akustischen Flächen 10 anhaftende Wassertropfen ändern. Insbesondere dürfen neben den gewünschten Hauptabstrahlkeulen infolge der Wassertropfen keine Nebenkeulen auftreten. Diese Nebenkeulen könnten sonst zur Störung der Laufzeitmessung führen, indem das gesendete akustische Signal auf direktem, kürzerem Wege über eine der Nebenkeulen auf den Ultraschallwandler auf der Empfangsseite trifft. Die Geometrie oder Topologie der freiliegenden akustischen Fläche 10 des Luftschallwandlers 1 bestimmt als Grenzfläche zur umgebenden Luft das Abstrahlverhalten des Ultraschallwandlers. Durch Änderungen der Topologie der Grenzfläche zur Luft von einer planen Oberfläche zu einer Topologie mit Hügeln und Tälern durch Wassertropfen wird aus einer phasenkorrelierten Wellenfront des abgestrahlten Luftschalls eine Abstrahlung mit chaotischen Phasenbezügen und damit eine undefinierte Abstrahlkeule. Durch die Hydrophilisierung der Außenoberfläche 12 wird die Ausbildung von Wassertropfen auf der freiliegenden akustischen Fläche 10 verhindert. Vielmehr wird das Wasser gespreitet, d. h. über die Außenoberfläche 12 verteilt, so dass es die Topologie der freiliegenden akustischen Fläche 10 nicht wesentlich verändert und die gerichtete Abstrahlung von Luftschall nicht beeinträchtigt.

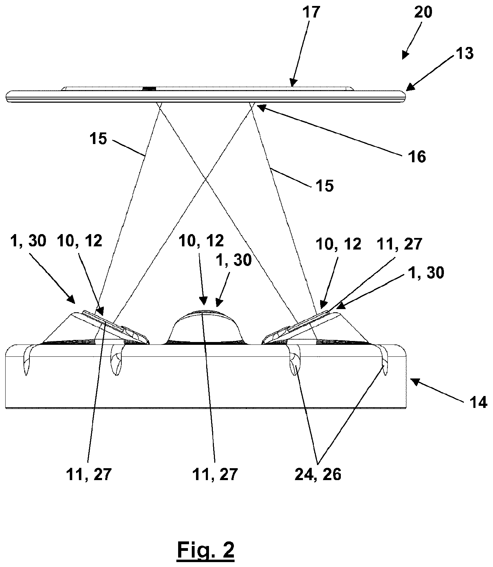

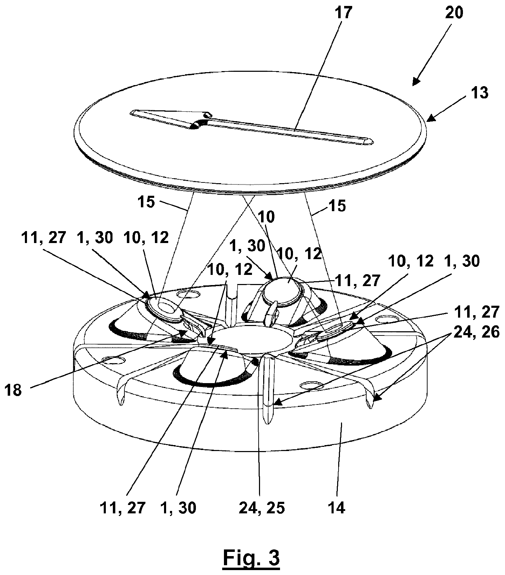

Das in **Fig. 2** **und** **Fig. 3** illustrierte Ultraschallanemometer umfasst insgesamt vier Ultraschallwandler 30 in Form von Luftschallwandlern 1 gemäß Fig. 1. Diese stehen im Wesentlichen nur mit ihrem Dünnblechformkörper 11, der die Außenoberfläche 12 aufweist und damit die freiliegende akustische Fläche 12 ausbildet, über einen Formkörper 14 beispielsweise aus Kunststoff oder Aluminium über. Dabei sind die Ultraschallwandler schwingungstechnisch, d. h. akustisch, von dem Formkörper 14 entkoppelt und durch den Dichtwulst 6 der Schutzhülle 5 gegenüber dem Formkörper 14 abgedichtet. Die vier Luftschallwandler 1 sind mit ihren Abstrahl- bzw. Empfangskeulen 15 auf eine Reflektorfläche 16 im Zentrum des Reflektors 13 gerichtet. Dabei liegen sich die Luftschallwandler 1 in Schallausbreitungsrichtung über die Reflektorfläche 16 paarweise in zwei zueinander orthogonalen Richtung gegenüber. Eine dieser Richtungen ist auf der Oberseite des Reflektors 13 durch ein Richtungssymbol 17 angezeigt. Mit dieser Anordnung der Luftschallwandler sind Geschwindigkeiten von Luft oder eines anderen Gases, das sich zwischen den Luftschallwandlern 1 und dem Reflektor 13 hindurch bewegt, in beiden parallel zu der Reflektorfläche 16 verlaufenden Richtungen durch Erfassung der Signallaufzeiten messbar. Dabei versteht es sich, dass auch dann, wenn hier von Luftschallwandlern 1 und deren Luftimpedanzanpassschicht 4 die Rede ist, das Ultraschallanemometer 20 auch zur Messung der Geschwindigkeit anderer Gase, aus denen heraus flüssiger Niederschlag auf die freiliegenden akustischen Flächen 10 auftreten kann, verwendet werden kann.

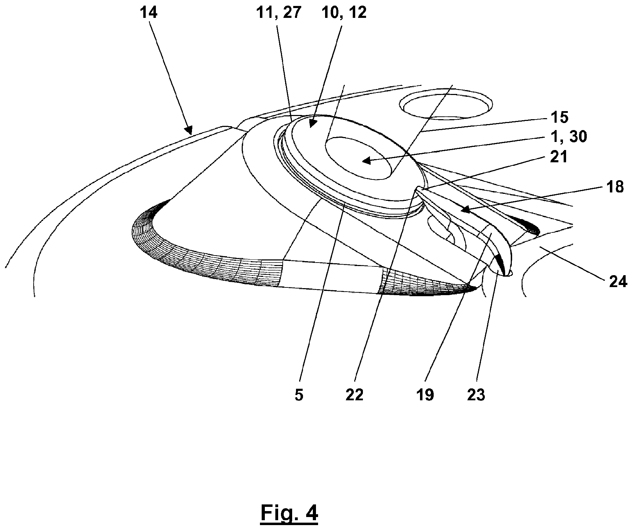

In den Fig. 2 und 3 ist bereits sichtbar und in Fig. 4 ist hervorgehoben, dass sich von dem Formkörper 14 aus ein Wasserabholarm 18 seitlich bis vor die jeweilige Außenoberfläche 12 erstreckt. Eine Oberfläche 19 des Wasserabholarms 18 ist ebenfalls hydrophil und vorzugsweise noch hydrophiler als die Außenoberfläche 12, so dass dann, wenn auf der Außenoberfläche 12 aufwachsendes Wasser mit dem freien Ende des Wasserabholarms 18 in Kontakt gelangt, das Wasser die Oberfläche 19 benetzt und so von der Außenoberfläche 12 abgeführt wird. Dieser Effekt wird noch dadurch befördert, dass das freie Ende 21 des Wasserabholarms 18 einem tiefsten Bereich 22 der Außenoberfläche 12 benachbart angeordnet ist und eine Basis 23 des Wasserabholarms 18 noch tiefer liegt, so dass die Schwerkraft das Wasser zu der Basis 23 führt, von wo es in einen Ablaufgraben 24 in dem Formkörper 14 gelangt. Der Ablaufgraben 24 umfasst hier einen Ringkanal 25 und von dort zum Außenumfang des Formkörpers 14 führende Stichkanäle 26 mit ausgeprägtem Gefälle. Über diese Stichkanäle 26 wird das Wasser auch dann abgeführt, wenn die Oberfläche des Formkörpers 14 nicht hydrophil ist.

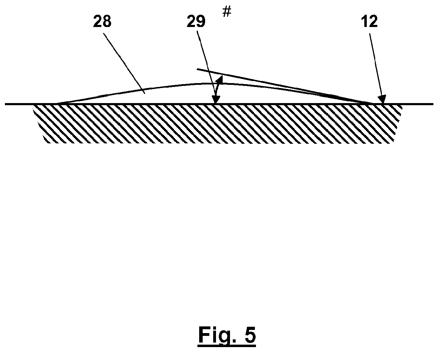

**Fig. 5** erläutert den bei einer Benetzung der Außenoberfläche 12 mit Wasser 28 auftretenden Benetzungswinkel 29. Der Benetzungswinkel 29 stellt sich als Gleichgewicht zwischen den Grenzflächenspannungen zwischen der benetzenden Flüssigkeit Wasser 28 und der Außenoberfläche 12, zwischen der umgebenden Luft und dem Wasser 28 sowie zwischen der umgebenden Luft und der Außenoberfläche 12 ein. Dabei geht neben Materialeigenschaften auch eine etwaige Strukturierung der Außenoberfläche 12 ein, die die Grenzflächenspannung zwischen dem Wasser 28 und der Außenoberfläche 12 beeinflusst.

### BEZUGSZEICHENLISTE

- 1: Luftschallwandler
- 2: elektrisch-mechanischer Wandler
- 3: akustisch aktive Fläche
- 4: Luftimpedanzanpassschicht
- 5: Schutzhülle
- 6: Dichtwulst
- 7: Bodenelement
- 8: Durchführung
- 9: Zuleitung
- 10: freiliegende akustische Fläche
- 11: Dünnblechformkörper
- 12: Außenoberfläche
- 13: Reflektor
- 14: Formkörper
- 15: Abstrahlkeule
- 16: Reflektorfläche
- 17: Richtungssymbol
- 18: Wasserabholarm
- 19: Oberfläche
- 20: Ultraschallanemometer
- 21: freies Ende
- 22: tiefster Bereich
- 23: Basis
- 24: Ablaufgraben
- 25: Ringkanal
- 26: Stichkanal
- 27: Abdeckung
- 28: Wasser
- 29: Benetzungswinkel
- 30: Ultraschallwandler

## Patentansprüche

1. Luftschallwandler (1) mit
- einem elektrisch-mechanischen Wandler (2),
- einer auf einer akustisch aktiven Fläche (3) des elektrisch-mechanischen Wandlers angeordneten Luftimpedanzanpassschicht (4) und
- einer auf der Luftimpedanzanpassschicht (4) angeordneten Abdeckung (27), die mit einer Außenoberfläche (12) eine freiliegende akustische Fläche (10) des Luftschallwandlers (1) ausbildet,
**dadurch gekennzeichnet, dass** die Außenoberfläche (12) hydrophil ist, wobei ein Benetzungswinkel (29) bei einer Benetzung der Außenoberfläche (12) mit Wasser (28) kleiner als 60° ist.

2. Luftschallwandler (1) nach Anspruch 1, **dadurch gekennzeichnet, dass** der Benetzungswinkel kleiner als 40° oder kleiner als 20° oder kleiner als 10° ist.

3. Luftschallwandler (1) nach einem der vorhergehenden Ansprüche, **dadurch gekennzeichnet, dass** die Außenoberfläche (12) eine hydrophilisierte Metalloberfläche ist, die durch Oxidieren und/oder Carbonieren und/oder Anrauen hydrophilisiert ist.

4. Luftschallwandler (1) nach Anspruch 3, **dadurch gekennzeichnet, dass** ein Metallanteil der Metalloberfläche zumindest überwiegend besteht aus Zink, Kupfer, Edelstahl oder Titan.

5. Luftschallwandler (1) nach einem der Ansprüche 3 und 4, **dadurch gekennzeichnet, dass** die Metalloberfläche die Außenoberfläche (12) eines Dünnblechformkörpers (11) ist.

6. Luftschallwandler (1) nach Anspruch 5, **dadurch gekennzeichnet, dass** der Dünnblechformkörper (11) auf einer Abdeckschichtlage aus Kunststoff angeordnet ist, die Teil einer elastischen Schutzhülle (5) um die Luftimpedanzanpassschicht (4) ist.

7. Vorrichtung mit
- einem Luftschallwandler (1) nach einem der vorhergehenden Ansprüche und
- einem Wasserabholarm (18), der seitlich vor einen tiefsten Bereich (22) der Außenoberfläche (12) reicht.

8. Vorrichtung nach Anspruch 7, **dadurch gekennzeichnet, dass** der Wasserabholarm (18) eine hydrophile Oberfläche (19) aufweist, wobei ein Benetzungswinkel (29) bei einer Benetzung der Oberfläche mit Wasser (28) kleiner als 60° oder kleiner als 40° oder kleiner als 20° oder kleiner als 10° ist.

9. Vorrichtung nach Anspruch 7 oder 8, **dadurch gekennzeichnet, dass** der Wasserabholarm (18) mit seinem freien Ende (21)
- in Richtung ihrer Flächennormale 0,05 bis 1,0 mm oder 0,1 bis 0,5 mm vor der Außenoberfläche (12) und/oder
- parallel zu ihrer Haupterstreckungsebene seitlich zwischen 0,1 mm neben der Außenoberfläche und bis zu 2 mm überlappend mit der Außenoberfläche oder seitlich zwischen 0,05 mm und 0,5 mm mit der Außenoberfläche (12) überlappend endet.

10. Vorrichtung nach einem der Ansprüche 7 bis 9, **dadurch gekennzeichnet, dass** eine Basis (23) des Wasserabholarms (18) in vertikaler Richtung mindestens 0,5 mm oder 1 mm oder 2 mm oder 5 mm unterhalb des tiefsten Bereichs (22) angeordnet ist.

11. Vorrichtung nach einem der Ansprüche 7 bis 10, **dadurch gekennzeichnet, dass** eine oder die Basis (23) des Wasserabholarms (18) in einem Ablaufgraben (24) angeordnet ist, dessen Grund von der Basis (23) weg abfällt.

12. Vorrichtung nach Anspruch 11, **dadurch gekennzeichnet, dass** der Ablaufgraben (24) in einem Formkörper (14) ausgebildet ist, an dem der Wasserabholarm (18) ortsfest gelagert und gegenüber dem der Luftschallwandler (1) mit einer elastischen Dichtung abgedichtet ist.

13. Ultraschallanemometer (20)
- mit einem Reflektor (13) und
- mit mindestens zwei Luftschallwandlern (1) nach einem der Ansprüche 1 bis 8 oder ein oder zwei Vorrichtungen nach einem der Ansprüche 7 bis 12, die mindestens zwei Luftschallwandlern (1) nach einem der Ansprüche 1 bis 6 umfassen,
- wobei die mindestens zwei Luftschallwandler (1) auf eine Reflektorfläche (16) gerichtet sind und einander - in Schallausbreitungsrichtung über die Reflektorfläche (16) betrachtet - gegenüber liegen.

14. Ultraschallanemometer (20) nach Anspruch 13, **dadurch gekennzeichnet, dass** die Reflektorfläche (16) hydrophil ist, wobei ein Benetzungswinkel (29) bei einer Benetzung der Oberfläche mit Wasser (28) kleiner als 60° oder kleiner als 40° oder kleiner als 20° oder kleiner als 10° ist.

15. Ultraschallanemometer (20) nach Anspruch 13 oder 14, **dadurch gekennzeichnet, dass** die Reflektorfläche (16) horizontal und oberhalb oder unterhalb der Luftschallwandler (1) angeordnet ist.

## Claims

1. Airborne sound transducer (1) comprising
- an electromechanical transducer (2),
- an air impedance matching layer (4) arranged on an acoustically active surface (3) of the electromechanical transducer, and
- a cover (27) arranged on the air impedance matching layer (4), the cover (27) forming an exposed acoustic area (10) of the airborne sound transducer (1) by means of an outer surface (12),
**characterised in that** the outer surface (12) is hydrophilic, wherein a contact angle (29), when wetting the outer surface (12) with water (28), is less than 60°.

2. Airborne sound transducer (1) of claim 1, **characterised in that** the contact angle is less than 40° or less than 20° or less than 10°.

3. Airborne sound transducer (1) of any of the preceding claims, **characterised in that** the outer surface (12) is a hydrophilized metal surface which is hydrophilized by oxidizing and/or carbonizing and/or roughening.

4. Airborne sound transducer (1) of claim 3, **characterised in that** a metal component of the metal surface is at least predominantly consisting of zinc, copper, stainless steel or titanium.

5. Airborne sound transducer (1) of any of the claims 3 and 4, **characterised in that** the metal surface is the outer surface (12) of a shaped body (11) made of thin metal sheet.

6. Airborne sound transducer (1) of claim 5, **characterised in that** the shaped body (11) made of thin metal sheet is arranged on a cover layer of plastic which is part of an elastic protective sleeve (5) enclosing the air impedance matching layer (4).

7. Apparatus comprising
- an airborne sound transducer (1) of any of the preceding claims, and
- a water pickup arm (18) which laterally extends up to in front of a lowermost area (22) of the outer surface (12).

8. Apparatus of claim 7, **characterised in that** the water pickup arm (18) has a hydrophilic surface (19), wherein a contact angle (29), when wetting of the surface with water (28), is less than 60° or less than 40° or less than 20° or less than 10°.

9. Apparatus of claim 7 or 8, **characterised in that** the water pickup arm (18) with its free end (21) ends
- 0.05 to 1.0 mm or 0.1 to 0.5 mm in front of the outer surface (12) in direction of its surface normal, and/or
- laterally between 0.1 mm next to the outer surface and 2 mm overlapping with the outer surface, or laterally between 0.05 mm and 0.5 mm overlapping with the outer surface (12) parallel to its plane of main extension.

10. Apparatus of any of the claims 7 to 9, **characterised in that**, in vertical direction, a base (23) of the water pickup arm (18) is arranged below the lowermost area (22) of the outer surface by at least 0.5 mm or 1 mm or 2 mm or 5 mm.

11. Apparatus of any of the claims 7 to 10, **characterised in that** a or the base (23) of the water pickup arm (18) is arranged in a drainage groove (24) whose bottom falls away from the base (23).

12. Apparatus of claim 11, **characterised in that** the drainage groove (24) is formed in a shaped body (14) to which the water pickup arm (18) is mounted in a spatially fixed way and with regard to which the airborne sound transducer (1) is sealed with an elastic seal.

13. Ultrasound anemometer (20)
- comprising a reflector (13), and
- comprising at least two airborne sound transducers (1) of any of the claims 1 to 8 or one or two apparatuses of any of the claims 7 to 12, which include at least two airborne sound transducers (1) of any of the claims 1 to 6,
- wherein the at least two airborne sound transducers (1) are directed towards a reflector surface (16) and oppose each other when viewed in sound propagation direction via the reflector surface (16).

14. Ultrasound anemometer (20) of claim 13, **characterised in that** the reflector surface (16) is hydrophilic, wherein a contact angle (29), when wetting the surface with water (28), is less than 60° or less than 40° or less than 20° or less than 10°.

15. Ultrasound anemometer (20) of claim 13 or 14, **characterised in that** the reflector surface (16) is oriented horizontally and arranged above or below the airborne sound transducers (1).

## Revendications

1. Transducteur à air (1) avec
- un transducteur électro-mécanique (2),
- une couche d'adaptation de l'impédance de l'air (4) disposée sur une surface acoustique active (3) du transducteur électro-mécanique et
- un couvercle (27) disposé sur la couche d'adaptation de l'impédance de l'air (4), qui constitue, avec une surface externe (12), une surface acoustique libre (10) du transducteur à air (1),
**caractérisé en ce que** la surface externe (12) est hydrophile, dans lequel un angle d'humidification (29) lors d'une humidification de la surface externe (12) avec de l'eau (28) est inférieur à 60°.

2. Transducteur à air (1) selon la revendication 1, **caractérisé en ce que** l'angle d'humidification est inférieur à 40° ou inférieur à 20° ou inférieur à 10°.

3. Transducteur à air (1) selon l'une des revendications précédentes, **caractérisé en ce que** la surface externe (12) est une surface métallique hydrophilisée qui est hydrophilisée par oxydation et/ou carbonation et/ou dépolissage.

4. Transducteur à air (1) selon la revendication 3, **caractérisé en ce qu'**une part métallique de la surface métallique est constituée au moins majoritairement de zinc, de cuivre, d'acier inoxydable ou de titane.

5. Transducteur à air (1) selon l'une des revendications 3 et 4, **caractérisé en ce que** la surface métallique est la surface externe (12) d'un corps moulé en tôle mince (11).

6. Transducteur à air (1) selon la revendication 5, **caractérisé en ce que** le corps moulé en tôle mince (11) est disposé sur une couche de recouvrement en matière plastique qui fait partie d'une enveloppe de protection élastique (5) autour de la couche d'adaptation de l'impédance de l'air (4).

7. Dispositif avec
- un transducteur à air (1) selon l'une des revendications précédentes et
- un bras de collecte d'eau (18) qui part latéralement avant la zone la plus basse (22) de la surface externe (12).

8. Dispositif selon la revendication 7, **caractérisé en ce que** le bras de collecte d'eau (18) présente une surface hydrophile (19), dans lequel un angle d'humidification (29) lors d'une humidification avec de l'eau (28) est inférieur à 60° ou inférieur à 40° ou inférieur à 20° ou inférieur à 10°.

9. Dispositif selon la revendication 7 ou 8, **caractérisé en ce que** le bras de collecte d'eau (18) se termine, avec son extrémité libre (21),
- dans la direction de sa normale par rapport à la surface de 0,05 mm à 1,0 mm ou de 0,1 mm à 0,5 mm avant la surface externe (12) et/ou
- avec une superposition parallèle à son plan d'extension principal latéralement entre 0,1 mm à côté de la surface externe et jusqu'à 2 mm avec la surface externe ou latéralement avec une superposition entre 0,05 mm et 0,5 mm avec la surface externe (12).

10. Dispositif selon l'une quelconque des revendications 7 à 9, **caractérisé en ce qu'**une base (23) du bras de collecte d'eau (18) est située verticalement au moins 0,5 mm ou 1 mm ou 2 mm ou 5 mm en dessous de la zone la plus basse (22).

11. Dispositif selon l'une des revendications 7 à 10, **caractérisé en ce qu'**une base (23) du bras de collecte d'eau (18) est disposée dans un sillon d'évacuation (24) dont le fond s'éloigne en descendant de la base (23).

12. Dispositif selon la revendication 11, **caractérisé en ce que** le sillon d'évacuation (24) est réalisé dans un corps moulé (14) au niveau duquel le bras de collecte d'eau (18) est logé de manière fixe et qui est étanchéifié par rapport au transducteur à air (1) avec un joint d'étanchéité élastique.

13. Anémomètre à ultrasons (20)
- avec un réflecteur (13) et
- avec au moins deux transducteurs à air (1) selon l'une des revendications 1 à 8 ou un ou deux dispositifs selon l'une des revendications 7 à 12, qui comprennent au moins deux transducteurs à air (1) selon l'une des revendications 1 à 6,
- dans lequel les au moins deux transducteurs à air (1) sont orientés sur une surface de réflecteur (16) et se font face, vus dans la direction de propagation du son sur la surface du réflecteur (16).

14. Anémomètre à ultrasons (20) selon la revendication 13, **caractérisé en ce que** la surface de réflecteur (16) est hydrophile, dans lequel un angle d'humidification (29) lors d'une humidification de la surface avec de l'eau (28) est inférieur à 60° ou inférieur à 40° ou inférieur à 20° ou inférieur à 10°.

15. Anémomètre à ultrasons (20) selon la revendication 13 ou 14, **caractérisé en ce que** la surface de réflecteur (16) est disposée horizontalement et au-dessus ou en dessous des transducteurs à air (1).
